# EUROPÄISCHE PATENTSCHRIFT

(11) **EP 0 930 698 B1**
(45) Veröffentlichungstag und Bekanntmachung des Hinweises auf die Patenterteilung: **22.09.2004**
(21) Anmeldenummer: 98121751.6
(22) Anmeldetag: 16.11.1998
(51) Int. Cl.: H02P 6/08

(54) **Verfahren und System zur Drehzahlsteuerung von elektronisch kommutierten Gleichstrommotoren**
Speed controlling method and system for electronically commutated DC motors
Procédé et système de pilotage de la vitesse de rotation d'un moteur DC à commutation électronique

(30) Priorität: 24.12.1997 DE 19757894
(43) Veröffentlichungstag der Anmeldung: 21.07.1999
(73) Patentinhaber: ebm-papst Mulfingen GmbH & Co.KG, 74673 Mulfingen (DE)
(72) Erfinder: Lipp, Helmut, 74677 Hohebach (DE); Jakob, Franz, 74673 Mulfingen-Zaisenhausen (DE); Schneeweiss, Hartmut, 97980 Bad Mergentheim (DE)
(74) Vertreter: Patentanwälte Dr. Solf & Zapf

(56) Entgegenhaltungen:
- DE-A- 3 819 062
- DE-C- 4 310 260
- US-A- 5 225 759
- US-A- 5 457 374

## Beschreibung

Die vorliegende Erfindung betrifft ein Verfahren und ein System zur Drehzahlsteuerung von - insbesondere kollektorlosen und mittels Rotor-Drehstellungssensoren gesteuerten - Gleichstrommotoren, wobei zur Drehzahlveränderung der Motorstrom in Abhängigkeit von einem Steuersignal manipuliert wird.

Es ist bekannt, einen kollektorlosen Gleichstrommotor mittels einer Halbleiter-Brückenschaltung anzusteuern, wobei der Motor im Brückenzweig der aus elektronischen Schaltelementen (üblicherweise Transistoren) gebildeten Brückenschaltung angeordnet ist. Die Schaltelemente werden von einer Treiberstufe angesteuert, und zwar in Abhängigkeit von Sensorsignalen mindestens eines berührungslosen Rotor-Drehstellungssensors, in der Regel eines Hallelementes (Hall-IC).

Im Zusammenhang mit einer solchen bekannten Steuerschaltung sind zudem verschiedene Verfahren bekannt, um den Motorstrom zum Zwecke einer Drehzahlveränderung (Drehzahlstellung) zu manipulieren.

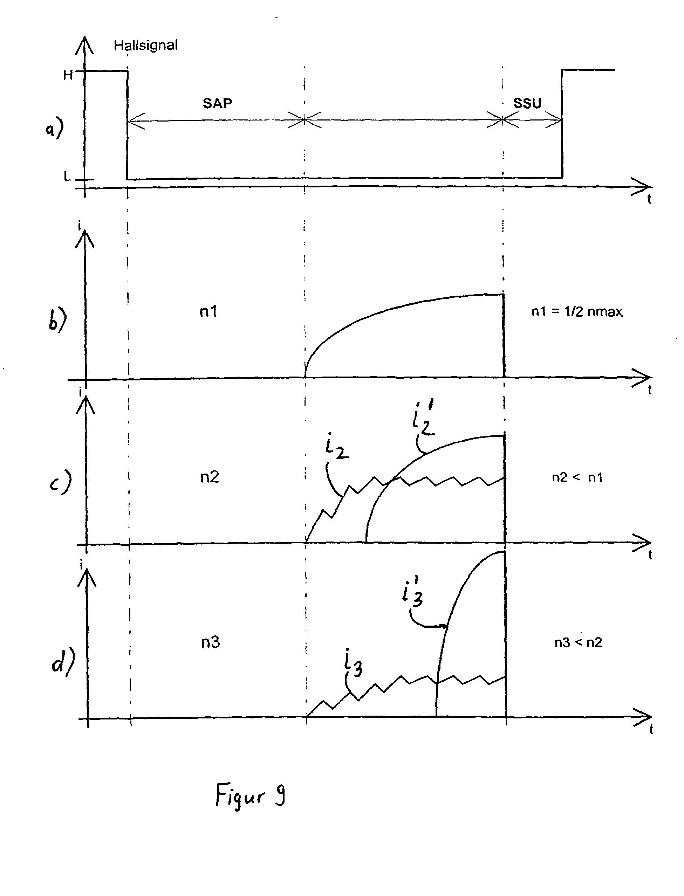

Bei einem ersten bekannten Verfahren werden die durch die elektronische Kommutierung erzeugten Motorstromimpulse am Beginn jedes Kommutierungsintervalls, d. h. ausgehend vom jeweiligen Signalwechsel des Drehstellungssensors, durch verzögertes Einschalten wenigstens eines der im jeweiligen Strompfad liegenden Schaltelementes zeitlich verkürzt. Dieses Verfahren ist als Stromabschnittspausen-Steuerung grundsätzlich bekannt. Nachteilig dabei ist vor allem, daß sich bei niedrigen Motor-Drehzahlen ein störendes Kommutierungsgeräusch bemerkbar macht, zumal im unteren Drehzahlbereich sonstige Laufgeräusche des Motors schwächer werden, so daß sie gegenüber dem Kommutierungsgeräusch in den Hintergrund treten. Außerdem treten bei diesen niedrigen Drehzahlen relativ hohe Stromspitzen auf, weil der jeweils sehr spät im Kommutierungsintervall eingeschaltete Motorstrom sehr steil ansteigt und dann auch wieder steil abfällt (vergleiche hierzu in der beiliegenden Figur 9 d) den Strom i'₃).

Ein weiteres bekanntes Verfahren zur Strom-Manipulation zum Zwecke der Drehzahlstellung ist die sogenannte PWM-Steuerung (Pulsweitenmodulation), wobei die kommutierungsabhängigen Stromimpulse jeweils mit konstanter Taktfrequenz in Taktimpulse zerhackt werden. Dabei sind die Taktimpulse bezüglich ihrer Pulsweite bzw. Impulsbreite variabel. Dies bedeutet, daß durch Veränderung des Tastverhältnisses eine Veränderung des effektiven Motorstromes und damit der Drehzahl erreicht werden kann. Vorteile der PWM-Steuerung sind in einer stufenlosen Drehzahlsteuerung und in einer geräuscharmen, nahezu geräuschfreien Arbeitsweise zu sehen, letzteres jedenfalls dann, wenn eine Taktfrequenz oberhalb von 16 kHz und damit außerhalb des menschlichen Hörbereichs gewählt wird. Allerdings entstehen durch die Taktung der Endstufen-Schaltelemente Schaltverluste, und zwar insbesondere im oberen Drehzahlbereich bei einem Tastverhältnis der Signalanteile High : Low von nahezu 100%, was zu einer relativ schlechten Energiebilanz führt.

Schließlich ist ein weiteres Verfahren als sogenannte Stromschwanzunterdrückung bekannt. Dabei wird jeder kommutierungsbedingte Stromimpuls schon eine bestimmte Zeit vor dem eigentlichen Ende des jeweiligen Kommutierungsintervalls beendet, indem mindestens eines der im jeweiligen Strompfad liegenden Schaltelemente entsprechend früher abgeschaltet bzw. gesperrt wird. Hierdurch wird ein nachteiliger negativer Stromschwanz eliminiert, der systembedingt im Kommutierungszeitpunkt bzw. gegen Ende des normalen, theoretischen Kommutierungsintervalls auftreten würde. Der Motorstrom kann sich dadurch in der verbleibenden Zeit bis zum Signalwechsel des Drehstellungssensors abbauen. Dies hat neben einer verbesserten Energiebilanz den Vorteil, daß im nachfolgenden Kommutierungsintervall die nächsten Schaltelemente praktisch leistungsfrei eingeschaltet werden können. Allerdings eignet sich dieses Verfahren der Stromschwanzunterdrückung zur Drehzahlsteuerung nur sehr bedingt.

Anspruch 1 wurde in seinem Oberbegriff vom Dokument US-A-5 457 374, abgegrenzt. Diese Druckschrift offenbart ein Verfahren zur Drehzahlsteuerung von - insbesondere kollektorlosen und mittels Rotordrehstellungssensoren gesteuerten - Gleichstrommotoren, wobei zur Drehzahländerung der Motorstrom in Abhängigkeit von einem Steuersignal manipuliert wird. Dabei werden zum Manipulieren des Motorstromes über den Drehzahl-Stellbereich (low motor speeds, high motor speeds) hinweg mindestens zwei unterschiedliche Steuerverfahren angewandt, wobei auch jeweils bei einer bestimmten Übergangsdrehzahl selbsttätig von einem Steuerverfahren zum anderen Steuerverfahren übergegangen wird. Als Steuerverfahren sind hier allerdings nur ein Stromsteuermodus (current-controlled mode) und ein Spannungssteuermodus (volltage-controlled mode) genannt.

Das Dokument US-A-5 225 759, beschreibt ein weiteres Steuerverfahren für einen kollektorlosen Gleichstrommotor. Grundsätzlich werden auch dabei zwei verschiedene Steuerverfahren angewandt, und zwar zum Anlauf eine Ansteuerung unabhängig von der Rotorposition, und ab einer bestimmten Drehzahl erfolgt die Ansteuerung unter Auswertung der in den Statorwicklungen induzierten Gegen-EMK und somit in Ahängigkeit von der Rotorstellung.

Das Dokument DE 43 10 260 C1, beschreibt eine elektronische Steuervorrichtung für einen elektronisch kommutierten Gleichstrommotor (EC-Motor). Auch dabei sind über den Drehzahlbereich hinweg verschiedene Steuerarten vorgesehen. In einem unteren Drehzahlbereich ist eine Linearsteuerung vorgesehen. Dies bedeutet, dass bei einem Stromflußwinkel von 100 % des Kommutierungswinkels die Amplitude der Steuersignal mit zunehmender Drehzahl bis zu einer ersten Drehzahl erhöht wird. Ab dieser ersten Drehzahl wird in einem mittleren Drehzahlbereich mit zunehmender Drehzahl bis zu einer zweiten Drehzahl die Amplitude der Steuersignale bis zu einer Maximalamplitude weiter erhöht, und gleichzeitig wir der Ansteuergrad des Stromflußwinkels von 100 % auf einen kleineren Wert verringert. Ab der zweiten Drehzahl, also im oberen Drehzahlbereich, wird mit zunehmender Drehzahl bis zu einer Maximaldrehzahl bei der Maximalamplitude der Steuersignale der Ansteuergrad vom kleineren Wert bis auf 100 % erhöht. Dies wird als Blocksteuerung bezeichnet, was grundsätzlich bedeutet, dass variable Strompausen und entsprechend variable Stromblöcke erzeugt werden. Somit dominiert, im oberen Drehzahlbereich die Blockstäuerung, und im unteren Drehzahlbereich dominiert die Linearsteuerung, während in einem mittleren Drehzahlbereich praktische beide Steuerarten kombiniert sind.

Das Dokument DE 38 19 062 C3, beschreibt ein Verfahren zur Steuerung von bürstenlosen Elektromotoren, wobei eine Verlagerung des Kommutierungszeitpunktes im Vordergrund steht. Eine Putsweitenmodutation ist hier nur am Rande erwähnt Offensichtlich soll auch hiermit eine Drehzahlregelung erreicht werden.

Der Vollständigkeit halber wird noch auf eine weitere Veröffentlichung hingewiesen, und zwar auf die Literaturstelle "Motor Control Seminar 1986, SGS Halbleiterbauelemente GmbH, April 1986, Seiten G10 und G11." Darin sind jedoch lediglich zwei alternative Kommutierungsarten beschrieben, und zwar einerseits eine Drehzahistellung durch analoge Stromregelung und andererseits eine bipolare Ausführung mit getakteter Stromregelung.

Der vorliegenden Erfindung liegt die Aufgabe zugrunde, ein Steuersystem der eingangs genannten Art zu schaffen, mit dem ein kollektorloser, elektronisch kommutierter Gleichstrommotor über den gesamten Drehzahlstellbereich hinweg mit optimaler Energiebilanz sowie besonders geräuscharm angesteuert werden kann.

Die Aufgabe wird durch die Merkmale der unabhängigen Ansprüche gelöst, Bevorzugte Ausgestaltungen sind in den abhängigen Ansprüchen definiert. Zum Manipulieren des Motorstromes über den Drehzahl-Stellbereich des Motors hinwegwerden mindestens zwei unterschiedliche Verfahren angewandt, wobei jeweils bei einer bestimmten Übergangsdrehzahl bzw. bei einem dieser entsprechenden Übergangswert des Steuersignal selbsttätig von einem Verfahren zum anderen Verfahren übergegangen wird, wobei der gesamte Drehzahl-Stellbereich in mindestens zwei Teilbereiche aufgeteilt und jedem Teilbereich gezielt ein für diesen jeweiligen Drehzahlbereich besonders geeignetes Steuerverfahren zugeordnet wird. In einem oberen Drehzahlbereich zwischen einer Maximaldrehzahl und einer - insbesondere etwa der halben Maximaldrehzahl entsprechenden - Übergangsdrehzahl wird der Motorstrom mittels einer - an sich bekannten - StromabschnittspausenSteuerung verändert, während in einem unteren Drehzahlbereich zwischen der Übergangsdrehzahl und der Drehzahl Null der Motorstrom durch eine - ebenfalls an sich bekannte - variable, pulsweitenmodulierte Taktung von einzelnen, bezüglich ihrer zeitlichen Dauer insbesondere konstanten Stromimpulsen verändert wird. Dies bedeutet, daß - ausgehend von einer Maximaldrehzahl - zum Verringern der Drehzahl - insbesondere durch Reduzierung des Steuersignals - zunächst stetig verlängerbare Strompausen erzeugt werden, so daß die verbleibenden Stromimpulse entsprechend verkürzt werden. Ab einem bestimmten Übergangswert des Steuersignals bzw. bei der bestimmten Übergangsdrehzahl wird selbsttätig von der Stromabschnittspausen-Steuerung zu einer PWM-Steuerung des verbleibenden, dann bezüglich seiner Zeitdauer bzw. seiner Rotor-Drehwinkelerstreckung grundsätzlich konstant bleibenden Stromimpulse übergegangen.

In weiterer vorteilhalfter Ausgestaltung der Erfindung ist eine zusätzliche Stromschwanzunterdrückung vorgesehen, wobei der Motorstrom - in an sich bekannter Weise - jeweils schon vor dem Ende jedes Kommutierungsintervalls abgeschaltet wird, so daß jeweils zwischen jedem Stromimpuls und dem Ende des zugehörigen Kommutierungsintervalls Stromlücken entstehen. Es weisen hierbei diese Stromlücken jeweils eine konstante, aber gegebenenfalls einstellbare Zeitdauer bzw. Winkelerstreckung von insbesondere etwa 15% des jeweiligen Kommutierungsintervalls auf. Hierdurch wird einerseits eine sichere Unterdrückung des nachteiligen negativen Stromschwanzes erreicht, was andererseits zu einem zusätzlichen Wirkungsgradgewinn führt.

Durch die spezielle Kombination der verschiedenartigen Steuerverfahren werden ganz wesentliche Vorteile erreicht. Durch die gezielte Anwendung des Stromabschnittspausen-Verfahrens gerade im oberen Drehzahlbereich wird eine gute Energiebilanz erreicht, die durch die schaltverlustarme Ansteuerung der Schaltelemente mit der Frequenz des Sensorsignals des Drehstellungssensors entsteht. Eventuelle, aus der relativ geringen Frequenz resultierende Kommutierungsgeräusche sind in diesem oberen Drehzahlbereich weniger störend, weil sie sich wegen der sonstigen, bei höheren Drehzahlen relativ starken Laufgeräusche des Motors kaum bemerkbar machen. Der erfindungsgemäße Übergang zu einer PWM-Steuerung gerade im unteren Drehzahlbereich führt vor allem zu einer geringeren Geräuschentwicklung relativ zu dem schächer werdenden Laufgeräusch, da die PWM-Taktfrequenz mit insbesondere etwa 20 kHz oberhalb der Hörgrenze des menschlichen Ohrs liegt. Im unteren Drehzahlbereich treten dabei - trotz der relativ hohen Taktfrequenz - nur relativ geringe Schaltverluste auf, weil der Strom dann ohnehin entsprechend geringer ist. Indem jeweils "nahtlos" von dem einen zum anderen Steuerverfahren übergegangen wird, werden Drehzahlsprünge vermieden, und die Energiebilanz verschlechtert sich auch bei reduzierter Motordrehzahl nicht.

Die vorzugsweise zusätzlich über den gesamten Drehzahlstellbereich hinweg konstant vorgesehene Stromschwanzunterdrückung trägt ebenfalls zu einer guten Energiebilanz durch Elimination der schädlichen negativen Stromschwanzbereiche bei, und die frühere Stromabschaltung führt zu einem leistungsfreien Einschalten der Schaltelemente im jeweils nachfolgenden Kommutierungsinterall, was sich natürlich sehr positiv auf die Lebensdauer der elektronischen Schaltelemente auswirkt.

Weitere vorteilhafte Ausgestaltungsmerkmale der Erfindung sind in der folgenden Beschreibung enthalten.

Anhand der Zeichnung soll im Folgenden die Erfindung beispielhaft näher erläutert werden. Dabei zeigen:
- Fig. 1: ein Schaltbild einer üblichen Ansteuerschaltung des Gleichstrommotors,
- Fig.2: zugehörige Diagramme des Verlaufs eines Hallsensor-Signals, des Motorstroms und des Drehmomentes jeweils relativ zur Rotordrehung, d. h. in Relation zu einem zusätzlich in einer Abwicklung eingezeichneten - Rotormagneten,
- Fig.3: eine erfindungsgemäße Steuerschaltung,
- Fig. 4-8: diverse Diagramme zur Erläuterung der Funktion des erfindungsgemäßen Steuersystems und
- Fig. 9: diverse Diagramme zur Verdeutlichung der unterschiedlichen Wirkungen des erfindungsgemäßen Steuersystems und eines bekannten Steuerverfahrens.

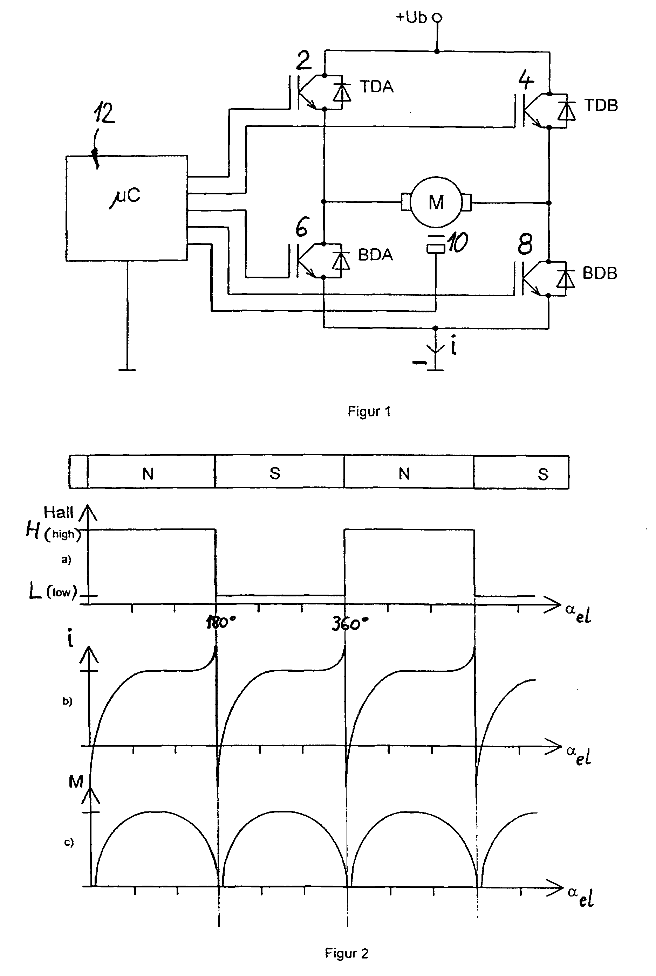

In Fig. 1 ist zunächst schematisch eine übliche Beschaltung beispielhaft für einen einsträngigen, elektronisch kommutierten Gleichstrommotor M dargestellt. Der Motor M ist mit einem Reluktanzhilfsmoment zur Vorgabe einer Anlaufposition ausgestattet und liegt innerhalb einer aus vier elektronischen Schaltelementen 2, 4, 6, 8 gebildeten Brückenschaltung in der Brückendiagonale. Die Schaltelemente sind üblicherweise durch Transistoren gebildet, wobei der Motor M mit seinen Anschlüssen zwischen den sogenannten oberstufigen Transistoren TDA, TDB (TD = Top Drive) und den sogenannten unterstufigen Transistoren BDA, BDB (BD = Bottom-Drive) liegt. Der Motor M ist mit einem Rotor-Drehstellungssensor 10, insbesondere mit einem Hallsensor bzw. Hall-IC, ausgestattet, der jeweils die aktuelle Drehstellung des Rotors ermittelt. Die Ausgangssignale des Sensors 10 werden einer Treiberstufe 12 zugeführt, die in der Regel durch einen Microcontroller µC gebildet ist.

Zum Betrieb des Motors M werden die Schaltelemente 2 bis 8 von der Treiberstufe 12 in geeigneter Weise angesteuert, wobei paarweise abwechselnd die Transistoren TDA und BDB und anschließend die Transistoren TDB und BDA angesteuert werden. Daraus resultieren wechselnde Stromflußrichtungen einerseits von + U_{b} ,TDA, Motor M, BDB zum Minuspol und andererseits von + U_{b} , TDB, M, BDA nach Minus. Bei der Drehung des Motors M bzw. seines Rotors wird vom Sensor 10 ein rotorstellungsabhängiges Signal erzeugt, welches abwechselnd die Werte logisch "Low" (L) oder logisch "High" (H) annimmt und bei jedem Polaritätswechsel des Rotormagneten diesen Wert entsprechend ändert, wie dies in Figur 2 a dargestellt ist. Dadurch ergeben sich typische Motorströme i nach Figur 2 b und Drehmomentverläufe nach Figur 2 c. Diese genannten Größen sind jeweils über den elektrischen Rotordrehwinkel α hinweg veranschaulicht. Stattdessen könnte hier grundsätzlich auch die Zeitachse t vorgesehen sein.

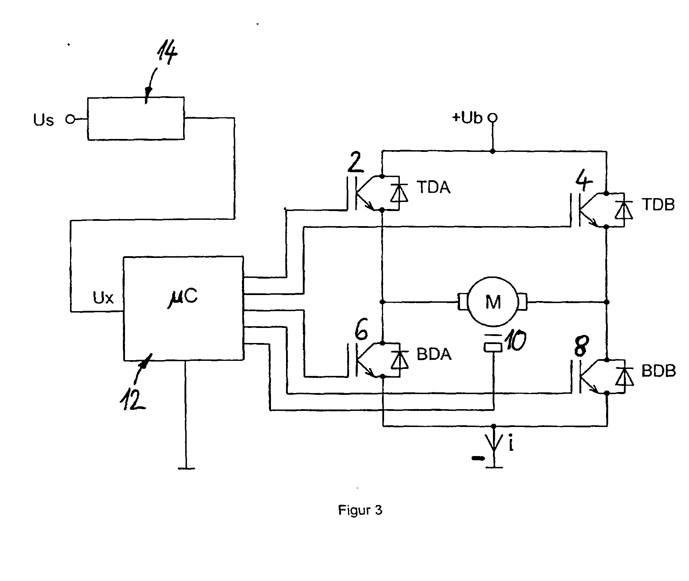

Der Stromverlauf nach Figur 2 b wird nun durch das erfindungsgemäße System zur Drehzahlsteuerung beeinflußt, was anhand der Figuren 3 bis 9 erläutert werden soll.

Die Figur 3 zeigt das Prinzipschaltbild einer Ausführung. Die Treiberstufe 12 (vgl. Fig. 1) wurde durch ein zusätzliches, vorgeschaltetes Eingangsinterface 14 ergänzt. Die Aufgabe und Wirkungsweise dieses Eingangsinterface 14 sowie auch die Auslegung bzw. Programmierung der durch einen Mikrocontroller gebildeten Treiberstufe 12 werden nun genauer erläutert.

Dem Eingangsinterface 14 wird ein Stellsignal Uₛ zugeführt, bei dem es sich vorteilhafterweise wahlweise entweder um eine analoge Spannung oder ein Signal frequenzkonstanter Art in Form eines PWM-Signals handeln kann. Das Eingangsinterface 14 ist derart ausgelegt, daß dieses Stellsignal Uₛ - unabhängig von seiner analogen oder pulsweitenmodulierten Art - jedenfalls in ein analoges Steuersignal Uₓ umgeformt wird. Zudem kann auch eine Pegelreduzierung erfolgen, um das Stellsignal Uₛ auf den Spannungspegel der Treiberstufe 12 zu reduzieren. Bei dem Steuersignal Uₓ handelt es sich um eine analoge Eingangssteuerspannung, die von 0V bis Uₓₘₐₓ eingestellt werden kann. Die maximale Eingangssteuerspannung Uₓₘₐₓ kann beispielsweise 5V betragen.

Es sind nun zur Unterscheidung verschiedener Betriebszustände bzw. unterschiedlicher Steuerverfahren ein unterer Drehzahlbereich - vorzugsweise mit einem Steuersignal zwischen 0V und etwa 0,5Uₓₘₐₓ - sowie ein oberer Drehzahlbereich - bevorzugt mit einem zugehörigen Steuersignal zwischen 0,5Uₓₘₐₓ und Uₓₘₐₓ - definiert.

Im folgenden wird bei der Betrachtung der Funktionsweise der Drehzahlstellung zunächst von der maximalen Drehzahl ausgegangen. Hierbei liegt am Steuereingang der Treiberstufe 12 ein Steuersignal Uₓ in der Höhe von Uₓₘₐₓ an. Durch Reduzierung des Steuersignals Uₓ kann nun die Drehzahl entsprechend verringert werden, wozu zunächst ein erstes Steuerverfahren angewandt wird. Bei einer bestimmten Übergangsdrehzahl von insbesondere etwa der halben Maximaldrehzahl bzw. bei einem entsprechenden Übergangswert des Steuersignals Uₓ von insbesondere etwa 0,5Uₓₘₐₓ wird dann selbständig von dem einen Steuerverfahren zu einem anderen Steuerverfahren übergegangen.

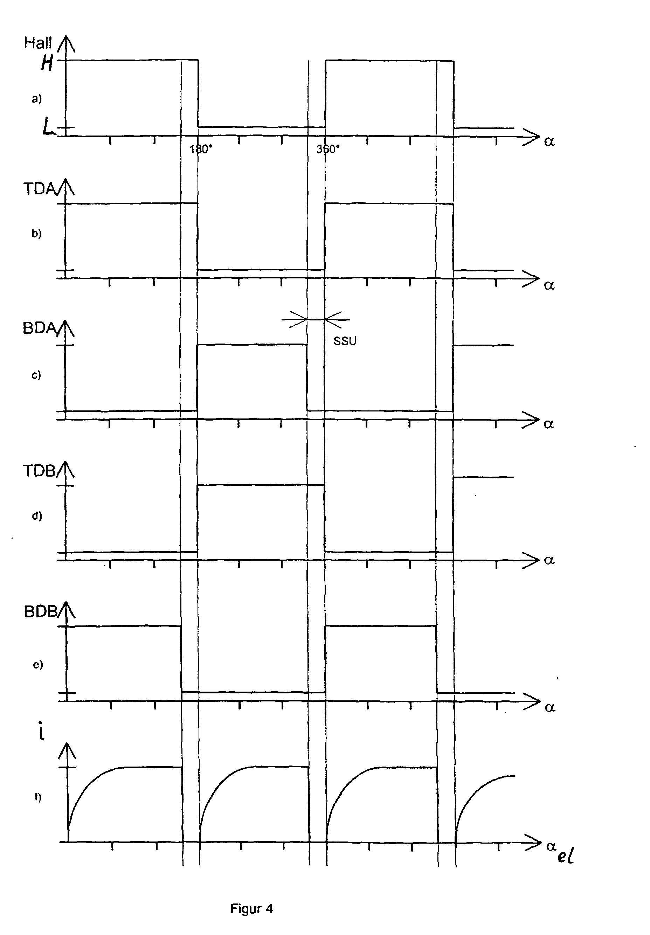

In Fig. 4 sind Diagramme für die Maximaldrehzahl veranschaulicht. Durch entsprechende Ansteuerung der Brücken-Schaltelemente erfolgt die Kommutierung des Motorstromes i jeweils am natürlichen Kommutierungszeitpunkt, d. h. mit dem jeweiligen Wechsel des Sensorsignals beginnt jeweils der Anstieg des Motorstromes i. Fig. 4 a zeigt das Sensorsignal des Drehstellungssensors, welches jeweils über einen Drehwinkel α von 180° elektrisch logisch H bzw. L ausgibt. Diese Signale werden von der Treiberstufe 12 verarbeitet, wodurch die Ansteuersignale für die Schaltelemente TDA und BDB bzw. TDB und BDA erzeugt werden, wie dies in den Figuren 4 b bis 4 e dargestellt ist.

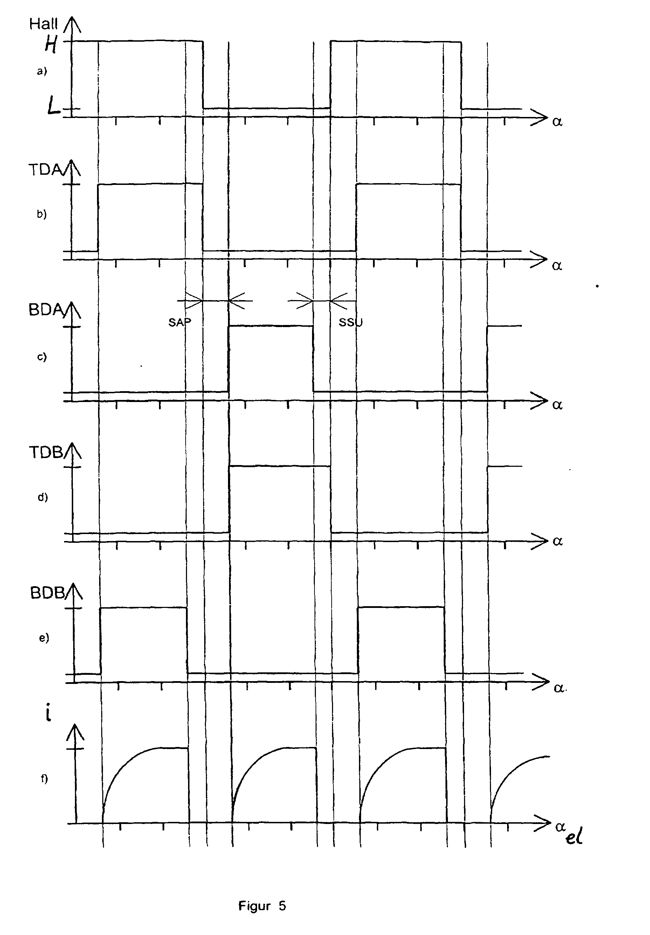

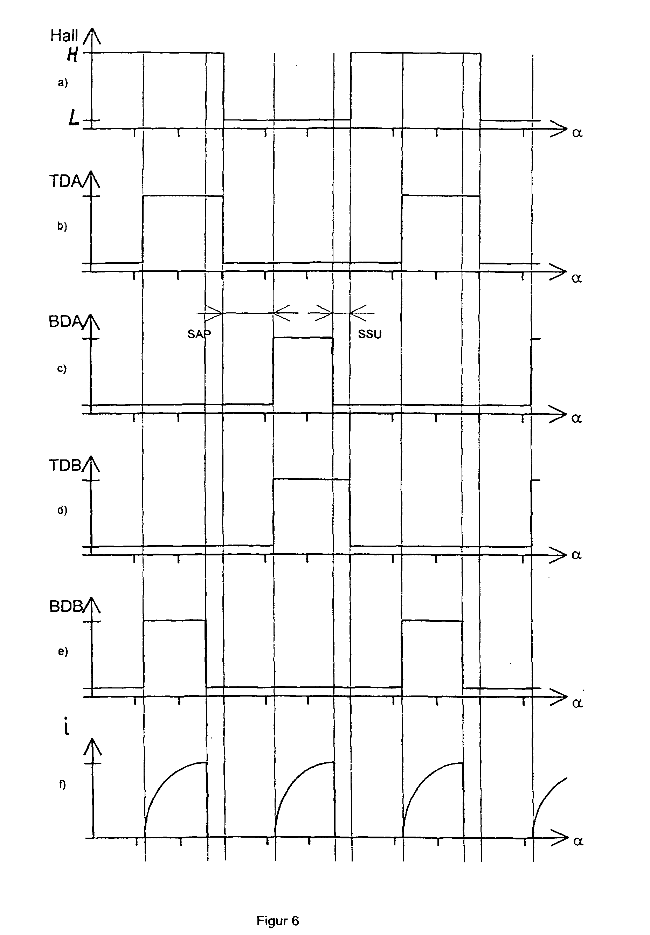

Es ist nun im oberen Drehzahlbereich zwischen der Maximaldrehzahl und einer Übergangsdrehzahl der Motorstrom i mittels einer an sich bekannten Stromabschnittspausen-Steuerung veränderbar. Dies ist in den Fig. 5 und 6 veranschaulicht. Wird das Steuersignal Uₓ gegenüber dem maximalen Wert Uₓₘₐₓ reduziert, so wird der Beginn der Ansteuerzeitpunkte aller Brücken-Schaltelemente 2 bis 8 um einen gewissen Winkel verschoben, wie dies in den Fig. 5 b bis 5 e dargestellt ist. Diese verzögerte Einschaltung führt zu einem Stromverlauf nach Fig. 5 f und damit zu einer entsprechenden Drehzahlreduzierung des Motors. Wird das Steuersignal Uₓ noch weiter reduziert, werden die Einschaltzeitpunkte aller Schaltelemente entsprechend noch weiter verschoben und damit vom natürlichen Kommutierungszeitpunkt weiter entfernt. Es entstehen somit am Anfang jedes Kommutierungsintervalls mehr oder weniger breite Stromabschnittspausen SAP, wodurch sich die Breite der verbleibenenden Stromimpulse jeweils weiter reduziert, wie dies beispielhaft in den Fig. 6 a bis 6 f gezeigt ist. Die Drehzahl des Motors reduziert sich dabei in entsprechender Weise.

Diese Stromabschnittspausen-Steuerung wird nur soweit angewandt, bis maximale Stromabschnittspausen SAP mit einer bestimmten Breite von vorzugsweise etwa 40% des gesamten Kommutierungsintervalls erreicht sind. Dies entspricht einer Übergangsdrehzahl von etwa der halben Maximaldrehzahl. Für eine weitergehende Reduzierung der Drehzahl wird das Steuersignal Uₓ unter den Übergangswert von 0,5Uₓₘₐₓ reduziert, wodurch selbständig zu einem anderen Steuerverfahren übergegangen wird. Dabei wird der zuvor erreichte Wert von ca. 40% der Stromabschnittspausen konstant beibehalten.

Nach Unterschreitung des Wertes 0,5Uₓₘₐₓ werden die beiden unterstufigen Schaltelemente BDA und BDB während der Durchschaltphase der entsprechend zugehörigen oberstufigen Schaltelemente TDB und TDA mit einem hochfrequenten PWM-Signal getaktet. Somit wird im unteren Drehzahlbereich erfindungsgemäß eine an sich bekannte PWM-Taktung angewandt. Die PWM-Frequenz liegt vorzugsweise bei etwa 20kHz, also jedenfalls außerhalb des menschlichen Hörbereichs.

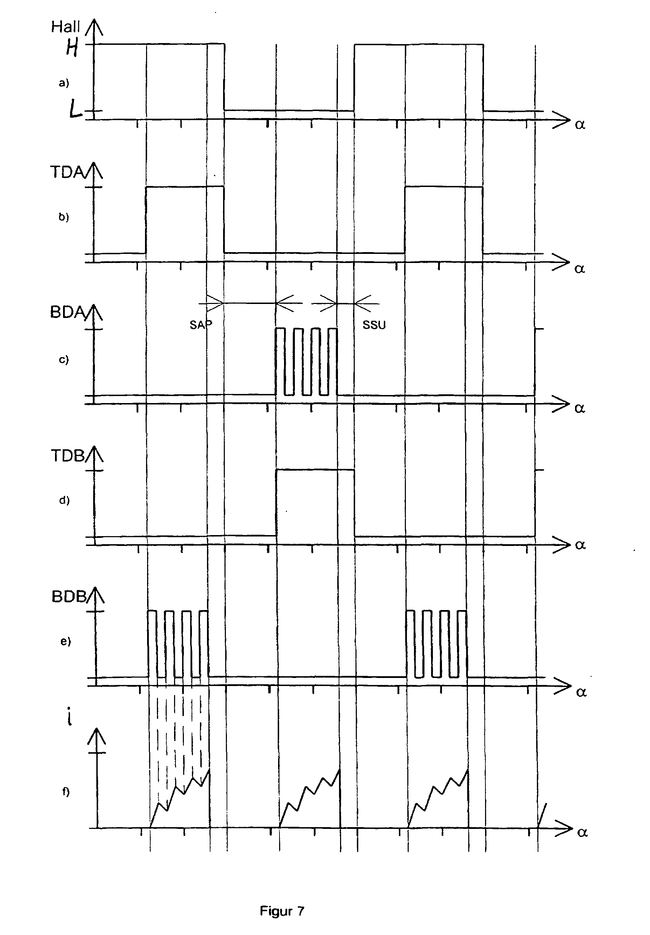

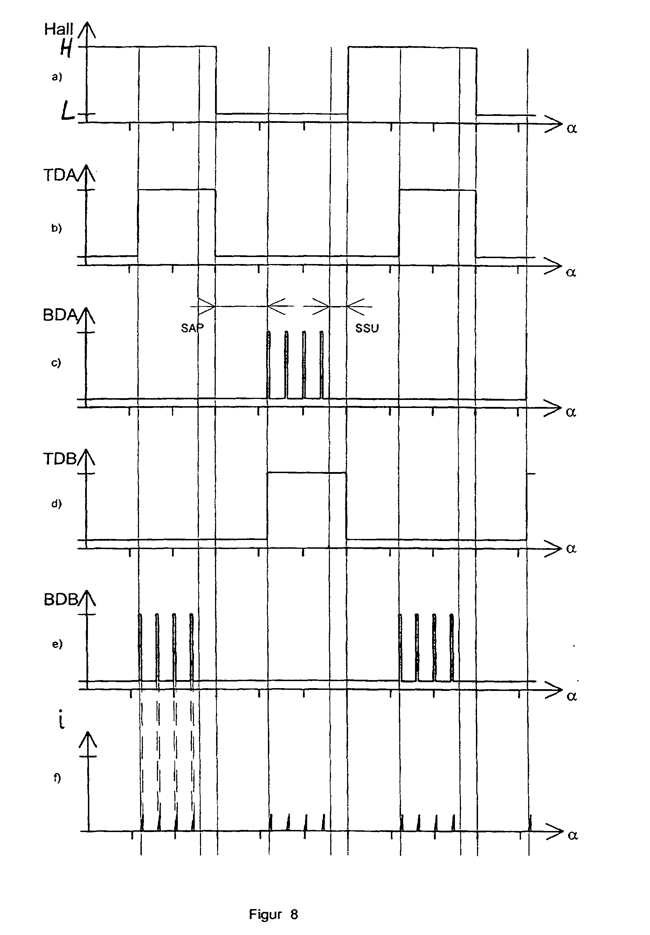

Dieses dem unteren Drehzahlbereich zugeordnete Steuerverfahren wird durch die Figuren 7 und 8 veranschaulicht. Daraus ergibt sich, daß die aufgrund der Stromabschnittspausen SAP verbleibenden Stromflächen jeweils mit konstanter Frequenz, aber mit veränderbarer Pulsbreite getaktet werden, was zu einer dem resultierenden Motorstrom angepaßten Drehzahl führt. Die Breite der Impulse ist maßgeblich für den Motorstrom, so daß die Drehzahl des Motors stufenlos bis zu 0 oder umgekehrt gesteuert werden kann.

Es ist eine zusätzliche Stromschwanzunterdrückung vorgesehen, Wie sich aus den Figuren 4 bis 9 ergibt, wird diese Maßnahme vorzugsweise konstant über den gesamten Drehzahlbereich des Motors hinweg angewandt. Dabei wird der Motorstrom i jeweils schon vor dem Ende jedes Kommutierungsintervalls abgeschaltet, so daß jeweils zwischen jedem Stromimpuls und dem Ende des zugehörigen Kommutierungsintervalls Stromlükken SSU entstehen. Diese Stromlücken SSU weisen jeweils eine konstante Zeitdauer bzw. einen konstanten Drehwinkel von insbesondere etwa 15% des jeweiligen Kommutierungsintervalls auf. Hierdurch wird sichergestellt, daß die in Fig. 2 b erkennbaren negativen Stromschwänze zuverlässig eliminiert werden. Die Vorteile dieser Maßnahme wurden oben bereits erläutert.

Wie sich beispielsweise aus den Fig. 4 c und 4 e ergibt, erfolgt die Stromschwanzunterdrückung dadurch, daß die Einschaltung der Schaltelemente BDA und BDB schon vor dem Ende des natürlichen Kommutierungszeitpunktes 180° bzw. 360° endet. Dies bewirkt die entsprechend frühere Abschaltung des Motorstromes, wie dies in Fig. 4 f dargestellt ist. Da diese Stromschwanzunterdrückung mit insbesondere etwa 15% des Kommutierungsintervalls konstant bleibt, ergibt sich für die Maximaldrehzahl eine maximale Stromflußdauer von 85%, die sich wiederum in 40% SAP-Steuerung und 45% PWM-Steuerung aufteilen.

Wie oben bereits erläutert, führt die Erfindung zu einer deutlich verbesserten Energiebilanz über den Drehzahlbereich hinweg sowie zur leistungsfreien Einschaltung der jeweils nächsten Schaltelemente nach Kommutierung. Durch die nahtlosen Übergänge zwischen den verschiedenen Steuerungsverfahren werden Drehzahlsprünge und Wirkungsgradverluste vermieden. Weiterhin ist die sehr geringe Geräuschentwicklung auch bei geringen Drehzahlen als besonderer Vorteil hervorzuheben. Schließlich ist es vorteilhaft, daß aufgrund des Eingangsinterface 14 sowohl eine lineare, der Eingangsspannung des Mikrocontrollers angepaßte Spannung, als aber auch ein externes PWM-Signal verwendet werden kann. Dies bringt den großen Vorteil mit sich, daß ein relativ geringer Elektronikaufwand erforderlich ist.

In Fig. 9 a sind einige Stromdiagramme für den unteren Drehzahlbereich veranschaulicht. Fig. 9 b zeigt die Situation, wenn die Drehzahl n1 etwa der halben Maximaldrehzahl nₘₐₓ entspricht. Gemäß Fig. 9 c wird bei einer Drehzahl n2 < n1 durch die PWM-Taktung ein sägezahnartiger Stromimpuls i₂ erzeugt, der sich über den gesamten Bereich von insbesondere 45% zwischen SAP und SSU erstreckt, dabei aber relativ flach verläuft. In Fig. 9 c ist zusätzlich ein Stromimpuls i'₂ eingezeichnet, der entstehen würde, wenn die SAP-Steuerung über den Übergangswert hinaus angewandt werden würde. Dieser Stromimpuls i'₂ wäre deutlich kürzer, dabei aber steiler, was bei einer Drehzahl n3 < n2 gemäß Fig. 9 d noch deutlicher wird (vgl. die Ströme i₃ und i'₃). Diese sehr nachteiligen Stromspitzen werden vermieden.

## Patentansprüche

1. Verfahren zur Drehzahlsteuerung von kollektorlosen und mittels Rotor-Drehzahlstellungssensoren (10) gesteuerten Gleichstrommotoren (M), wobei zur Drehzahlveränderung der Motorstrom (i) in Abhängigkeit von einem Steuersignal (Uₓ) manipuliert wird, wozu über den Drehzahl-Stellbereich (n = n₀ bis nₘₐₓ) des Motors (M) hinweg mindestens zwei unterschiedliche Steuerverfahren angewandt werden und jeweils bei einer bestimmten Übergangsdrehzahl (nₓ) bzw. bei einem dieser entsprechenden Übergangswert des Steuersignals (Uₓ) selbsttätig von einem Steuerverfahren zum anderen Steuerverfahren übergegangen wird,
**dadurch gekennzeichnet, dass** in einem oberen Drehzahlbereich (n = nₓ bis nₘₐₓ) zwischen einer Maximaldrehzahl (nₘₐₓ) und der Übergangsdrehzahl (nₓ) der Motorstrom (i) mittels einer Stromabschnittspausen-Steuerung (SAP) verändert wird, und dass in einem unteren Drehzahlbereich (n = n₀ bis nₓ) zwischen der Übergangsdrehzahl (nₓ) und der Drehzahl Null (n₀) der Motorstrom (i) durch eine variable, pulsweitenmodulierte Taktung (PWM) von einzelnen Stromimpulsen verändert wird.

2. Verfahren nach Anspruch 1,
**dadurch gekennzeichnet, dass** die Höhe der jeweiligen Übergangsdrehzahl (nₓ) bzw. des Übergangswertes des Steuersignals (Uₓ) über Stellmittel veränderbar ist.

3. Verfahren nach Anspruch 1 oder 2,
**dadurch gekennzeichnet, dass** jeweils ausgehend von mittels eines Drehstellungssensors (10) als Sensorsignalwechsel (H-L/L-H) bestimmten Kommutierungspunkten durch variabel verzögertes Einschalten des Motorstromes (i) Stromabschnittspausen (SAP) mit variabler Zeitdauer erzeugt werden, so dass der Motorstrom (i) aus verbleibenden einzelnen Stromimpulsen mit variabler Zeitdauer bzw. variablem Drehwinkelbereich besteht.

4. Verfahren nach einem der Ansprüche 1 bis 3,
**dadurch gekennzeichnet, dass** - bezogen auf die Zeit- bzw. Drehwinkeldauer eines von zwei Sensorsignalwechseln begrenzten Kommutierungsintervalls - die Stromabschnittspausen (SAP) in einem Teilbereich zwischen Null und maximal etwa 40 % des Kommutierungsintervalls veränderbar sind.

5. Verfahren nach einem der Ansprüche 1 bis 4,
**dadurch gekennzeichnet, dass** die PWM-getakteten Stromimpulse jeweils eine konstante Zeit- bzw. Drehwinkeldauer von vorzugsweise etwa 45 % des jeweiligen Kommutierungsintervalls aufweise.

6. Verfahren nach einem der Ansprüche 1 bis 5,
**dadurch gekennzeichnet, dass** die PWM-Taktung mit einer konstanten, vorzugsweise oberhalb einer Hörgrenze von etwa 16 kHz liegenden Taktfrequenz, insbesondere mit etwa 20 kHz, erfolgt.

7. Verfahren nach einem der Ansprüche 1 bis 6,
**gekennzeichnet durch** eine zusätzliche Stromschwanzunterdrückung (SSU), wobei der Motorstrom (i) jeweils schon vor dem Ende jedes Kommutierungsintervalls abgeschaltet wird, so dass jeweils zwischen jedem Stromimpuls und dem Ende des zugehörigen Kommutierungsintervalls Stromlücken (SSU) entstehen.

8. Verfahren nach Anspruch 7
**dadurch gekennzeichnet, dass** die Stromlücken (SSU) jeweils eine - gegebenenfalls einstellbar - konstante Zeit- bzw. Drehwinkeldauer von insbesondere etwa 15 % des jeweiligen Kommutierungsintervalls aufweisen.

9. Verfahren nach einem der Ansprüche 1 bis 8,
**dadurch gekennzeichnet, dass** die Übergangsdrehzahl (nₓ) etwa der halben Maximaldrehzahl (nₘₐₓ/2) entspricht.

10. Verfahren nach einem der Ansprüche 1 bis 9,
**dadurch gekennzeichnet, dass** der Übergangswert des Steuersignals (Uₓ) etwa dem halben Maximalwert (Uₘₐₓ/2) entspricht.

11. Verfahren nach einem der Ansprüche 1 bis 10,
**dadurch gekennzeichnet, dass** der Motor (M) mittels einer - aus Brücken-Schaltelementen (2,4,6,8) bestehenden - Brückenschattung angesteuert wird, wobei die Schaltelemente (2-8) von einer - insbesondere von einem Microcontroller (µC) gebildeten und einen Steuereingang für das Steuersignal (Uₓ) aufweisenden Treiberstufe (12) anhand des Sensorsignals des Drehstellungssensors (10) gesteuert werden.

12. Verfahren nach Anspruch 11,
**dadurch gekennzeichnet, dass** über ein der Treiberstufe (12) vorgeschaltetes Eingangsinterface ein an einem Interface-Eingang angelegtes, wahlweise pulsweitenmoduliertes oder analoges Stellsignal (Uₛ) in das jedenfalls analoge Steuersignal (Uₓ) umgeformt wird.

13. System zur Drehzahlsteuerung von kollektorlosen und mittels Rotor-Drehzahlstellungssensoren (10) gesteuerten Gleichstrommotoren (M), mit Mitteln, die folgende Funktion haben; zur Drehzahlveränderung wird der Motorstrom (i) in Abhängigkeit von einem Steuersignal (Uₓ) manipuliert, wozu über den Drehzahl-Stellbereich (n = n₀ bis nₘₐₓ) des Motors (M) hinweg mindestens zwei unterschiedliche Steuerverfahren angewandt werden und jeweils bei einer bestimmten Übergangsdrehzahl (nₓ) bzw. bei einem dieser entsprechenden Übergangswert des Steuersignals (Uₓ) selbsttätig von einem Steuerverfahren zum anderen Steuerverfahren übergegangen wird,
**dadurch gekennzeichnet, dass** in einem oberen Drehzahlbereich (n = nₓ bis nₘₐₓ) zwischen einer Maximaldrehzahl (nₘₐₓ) und der Übergangsdrehzahl (nₓ) der Motorstrom (i) mittels einer Stromabschnittspausen-Steuerung (SAP) verändert wird, und dass in einem unteren Drehzahlbereich (n = n₀ bis nₓ) zwischen der Übergangsdrehzahl (nₓ) und der Drehzahl Null (n₀) der Motorstrom (i) durch eine variable, putsweitenmodutiette Taktung (PWM) von einzelnen Stromimpulsen verändert wird.

14. System nach Anspruch 13 mit Mitteln, die die Funktion nach einem der Ansprüche 2-12 haben.

## Claims

1. Method for controlling the speed of brushless DC motors (M) which are controlled using rotor speed-regulating sensors (10), the motor current (i) being manipulated as a function of a control signal (Uₓ) for the purpose of varying the speed, for which purpose at least two different control methods are used over the speed range (n = n₀ to nₘₐₓ) of the motor (M), and, in each case at a specific transition speed (nₓ) or at a transition value for the control signal (Uₓ) which corresponds to this transition speed (nₓ), there is an automatic transition from one control method to the other control method, **characterized in that**, in an upper speed range (n = nₓ to nₘₐₓ) between a maximum speed (nₘₐₓ) and the transition speed (nₓ), the motor current (i) is varied by means of current gating pause control (SAP), and **in that**, in a lower speed range (n = n₀ to nₓ) between the transition speed (nₓ) and a speed of zero (n₀), the motor current (i) is varied using variable, pulse-width-modulated clocking (PWM) of individual current pulses.

2. Method according to Claim 1, **characterized in that** the level of the respective transition speed (nₓ) or the transition value for the control signal (Uₓ) can be varied using regulating means.

3. Method according to Claim 1 or Claim 2, **characterized in that**, in each case starting from commutation points determined as the sensor signal change (H-L/L-H) by means of a speed-regulating sensor (10), current gating pauses (SAP) having a variable time period are generated by connecting, with a variable delay, the motor current (i), with the result that the motor current (i) comprises the remaining individual current pulses with a variable time period or a variable rotation-angle range.

4. Method according to one of Claims 1 to 3, **characterized in that**, based on the time period or on the rotation-angle period of a commutation interval which is limited by two sensor signal changes, the current gating pauses (SAP) can be varied within a subregion between zero and a maximum of approximately 40% of the commutation interval.

5. Method according to one of Claims 1 to 4, **characterized in that** the PWM-clocked current pulses each have a constant time period or rotation-angle period of preferably approximately 45% of the respective commutation interval.

6. Method according to one of Claims 1 to 5, **characterized in that** the PWM clocking takes place at a constant clock frequency, which is preferably above an audible limit of approximately 16 kHz, in particular at approximately 20 kHz.

7. Method according to one of Claims 1 to 6, **characterized by** additional current-trailing-edge suppression (SSU), in which the motor current (i) is disconnected in each case even before the end of each commutation interval, resulting in intermittent current conditions (SSU) in each case between each current pulse and the end of the associated commutation interval.

8. Method according to Claim 7, **characterized in that** the intermittent current conditions (SSU) each have a constant (if necessary a set) time period or rotation-angle period of in particular approximately 15% of the respective commutation interval.

9. Method according to one of Claims 1 to 8, **characterized in that** the transition speed (nₓ) corresponds to approximately half the maximum speed (nₘₐₓ/2).

10. Method according to one of Claims 1 to 9, **characterized in that** the transition value for the control signal (Uₓ) corresponds to approximately half the maximum value (Uₘₐₓ/2).

11. Method according to one of Claims 1 to 10, **characterized in that** the motor (M) is driven by means of a bridge circuit comprising bridge switching elements (2, 4, 6, 8), the switching elements (2-8) being controlled by a driver stage (12), which is in particular formed by a microcontroller (µC) and has a control input for the control signal (Uₓ), using the sensor signal of the speed-regulating sensor (10).

12. Method according to Claim 11, **characterized in that**, by means of an input interface upstream of the driver stage (12), an actuating signal (Uₛ), which is applied to an interface input and is either pulse-width-modulated or analogue, is converted to the control signal (Uₓ) which is always analogue.

13. System for controlling the speed of brushless DC motors (M) which are controlled using rotor speed-regulating sensors (10) having means which have the following function: for the purpose of varying the speed, the motor current (i) is manipulated as a function of a control signal (Uₓ), for which purpose at least two different control methods are used over the speed range (n = n₀ to nₘₐₓ) of the motor (M), and, in each case at a specific transition speed (nₓ) or at a transition value for the control signal (Uₓ) which corresponds to this transition speed (nₓ), there is an automatic transition from one control method to the other control method, **characterized in that**, in an upper speed range (n = nₓ to nₘₐₓ) between a maximum speed (nₘₐₓ) and the transition speed (nₓ), the motor current (i) is varied by means of current gating pause control (SAP), and **in that**, in a lower speed range (n = n₀ to nₓ) between the transition speed (nₓ) and a speed of zero (n₀), the motor current (i) is varied using variable. pulse-width-modulated clocking (PWM) of individual current pulses.

14. System according to Claim 13, having means which have the function according to one of Claims 2-12.

## Revendications

1. Procédé de commande de la vitesse de rotation de moteurs à courant continu (M) sans collecteur et commandés au moyen de capteurs (10) de position de rotation du rotor, dans lequel, pour la modification de la vitesse de rotation, le courant (i) du moteur est manipulé en fonction d'un signal de commande (Uₓ) c'est pour cela, au moins deux procédés de commande différents sont utilisés sur la plage de réglage de la vitesse de rotation (n = n₀ à nₘₐₓ) du moteur (M), et, à une certaine vitesse de rotation de transition (nₓ) ou à une valeur de transition du signal de commande (Uₓ) qui y correspond, il se produit automatiquement un passage d'un procédé de commande à l'autre procédé de commande,
**caractérisé en ce que**, dans une plage supérieure de vitesses de rotation (n = nₓ à nₘₐₓ), entre une vitesse de rotation maximale (nₘₐₓ) et la vitesse de rotation de transition (nₓ), le courant du moteur (i) est modifié au moyen d'une commande des pauses de coupure de courant ( SAP) et **en ce que**, dans une plage inférieure de vitesses de rotation (n = n₀ à nₓ), entre la vitesse de rotation de transition (nₓ) et la vitesse de rotation zéro (n₀), le courant du moteur (i) est modifié par un cadençage variable d'impulsions de courant distinctes qui est modulée en largeur des impulsions (PWM).

2. Procédé selon la revendication 1,
**caractérisé en ce que** le niveau de la vitesse de rotation considérée (nₓ) ou de la valeur de transition du signal de commande (Uₓ) peut être modifiée par l'intermédiaire de moyens de réglage.

3. Procédé selon la revendication 1 ou 2,
**caractérisé en ce que**, à chaque fois en partant de points de commutation déterminés comme inversions de signal de capteur (H-L/L-H) au moyen d'un capteur de position de rotation (10), des pauses de coupure de courant (SAP) de durée variable sont produites par un établissement retardé de façon variable du courant (i) du moteur, de sorte que le courant (i) du moteur est composé d'impulsions de courant individuelles restantes, qui possèdent une durée variable ou une plage angulaire de rotation variable.

4. Procédé selon une des revendications 1 à 3,
**caractérisé en ce que** - rapporté à la durée, comptée dans le temps ou en angle de rotation, d'un intervalle de commutation limitée par deux inversions du signal de capteur - les pauses de coupure de courant (SAP) peuvent être modifiées dans un intervalle partiel entre zéro et au maximum d'environ 40% de l'intervalle de commutation.

5. Procédé selon une des revendications 1 à 4,
**caractérisé en ce que** les impulsions de courant cadencées en PWM présentent chacune une durée constante, comptée dans le temps ou en angle de rotation, qui est de préférence d'environ 45 % de l'intervalle de commutation concerné.

6. Procédé selon une des revendications 1 à 5,
**caractérisé en ce que** le cadençage PWM s'effectue avec une fréquence de cycle constante, qui est de préférence supérieure à une limite audible d'environ 16 kHz, en particulier égale à environ 20 kHz.

7. Procédé selon une des revendications 1 à 6,
**caractérisé par** une suppression additionnelle des queues de courant (SSU), dans laquelle le courant de moteur (i) est déjà coupé à chaque fois avant la fin de chaque intervalle de commutation, de sorte qu' il se forme des lacunes de courant (SSU) entre chaque impulsion de courant et la fin de l'intervalle de commutation correspondant.

8. Procédé selon la revendication 7,
**caractérisé en ce que** les lacunes de courant (SSU) présentent une durée constante, comptée dans le temps ou en angle de rotation - éventuellement réglable- qui est en particulier d'environ 15 % de l'intervalle de commutation correspondant.

9. Procédé selon une des revendications 1 à 8,
**caractérisé en ce que** la vitesse de rotation de transition (nₓ) correspond à peu près à la moitié de la vitesse de rotation maximale (nₘₐₓ/2).

10. Procédé selon une des revendications 1 à 9,
**caractérisé en ce que** la valeur de transition du signal de commande (Uₓ) correspond à peu près à la moitié de la valeur maximale (Uₘₐₓ/2).

11. Procédé selon une des revendications 1 à 10,
**caractérisé en ce que** le moteur (M) est piloté au moyen d'un circuit en pont - composé d'éléments de circuit en pont (2, 4, 6, 8), les éléments de circuit (2-8) étant commandés par un étage d'attaque (12) - formé en particulier d'un microcontrôleur (µC) et présentant une entrée de commande pour le signal de commande (Uₓ), sur la base du signal de capteur du capteur de position de rotation (10).

12. Procédé selon la revendication 11,
**caractérisé en ce que**, sous l'action d'une interface d'entrée connectée en amont de l'étage d'attaque (12), un signal de réglage (Uₛ), soit modulé en largeur des impulsions, soit analogique, appliqué à une entrée de l'interface, est transformé en le signal de commande (Uₓ), analogique dans chaque cas.

13. Système pour la commande de la vitesse de rotation de moteurs à courant continu (M) sans collecteur et commandés au moyen de capteurs (10) de position de rotation du rotor, comprenant des moyens qui ont les fonctions suivantes : pour la modification de la vitesse de rotation, le courant (i) du moteur est manipulé en fonction d'un signal de commande (Uₓ) cet, pour cela, au moins deux procédés de commande différents sont utilisés sur la plage de réglage de la vitesse de rotation (n = n₀ à nₘₐₓ) du moteur (M), et, à une certaine vitesse de rotation de transition (nₓ) ou à une valeur de transition du signal de commande (Uₓ) qui y correspond, il se produit automatiquement un passage d'un procédé de commande à l'autre procédé de commande
**caractérisé en ce que**, dans une plage supérieure de vitesses de rotation (n = nₓ à nₘₐₓ), entre une vitesse de rotation maximale (nₘₐₓ) et la vitesse de rotation de transition (nₓ), le courant du moteur (i) est modifié au moyen d'une commande des pauses de coupure de courant ( SAP) et **en ce que**, dans une plage inférieure de vitesses de rotation (n = n₀ à n_{X}), entre la vitesse de rotation de transition (nₓ) et la vitesse de rotation zéro (n₀), le courant du moteur (i) est modifié par une commande cyclique variable d'impulsions de courant distinctes qui est modulée en largeur des impulsions (PWM).

14. Système selon la revendication 13 avec des moyens qui ont des fonctions selon l'une des revendications 2 à 12.
